# EUROPEAN PATENT APPLICATION

(11) **EP 4 438 378 A1**
(43) Date of publication of application: **02.10.2024**
(21) Application number: 24162206.7
(22) Date of filing: 07.03.2024
(51) Int. Cl.: B60L 3/00, B60L 3/12, B60L 53/30, B60L 53/65, B60L 53/66, B60L 53/68, B60L 58/12, B60L 58/13, B60L 58/14

(54) **CHARGING CONTROL DEVICE, VEHICLE, AND CHARGING CONTROL METHOD**

(30) Priority: 10.03.2023 JP 2023037864
(71) Applicant: TOYOTA JIDOSHA KABUSHIKI KAISHA, Toyota-shi, Aichi-ken, 471-8571 (JP)
(72) Inventor: MISAWA, Takahiro, TOYOTA-SHI, AICHI-KEN, 471-8571 (JP)
(74) Representative: Cabinet Beau de Loménie

(57) **Abstract**

A charging control device (150) includes: an acquisition unit (154) that is configured to acquire charging schedule information related to a scheduled timing of charging; and a signal output unit (151) that is configured to output a request signal for updating a digital certificate when a term of validity of the digital certificate expires by the scheduled timing of charging.

## Description

### BACKGROUND OF THE INVENTION

### 1. Field of the Invention

The present disclosure relates to a charging control device, a vehicle, and a charging control method.

### 2. Description of Related Art

Japanese Patent No. 4353197 discloses a vehicle that is charged by a charger. The charger reads out an ID code from a transponder key in an immobilizer system of the vehicle and transmits the read ID code to the vehicle. Then, authentication is performed at the vehicle, and supply of electricity for charging is permitted when the authentication result is normal.

### SUMMARY OF THE INVENTION

Here, at the time of charging, when the term of validity of the transponder key expires, an update of the transponder key is needed. In such a case, time for updating the transponder key is required at the time of charging, so that time required to complete the charging is prolonged.

The present disclosure provides a charging control device, a vehicle, and a charging control method that can restrain the time required to complete charging of a vehicle from being prolonged.

A charging control device according to a first aspect of the present disclosure is a charging control device of a vehicle, the charging control device being configured to control charging authenticated based on a digital certificate, the charging control device including: an acquisition unit configured to acquire charging schedule information related to a scheduled timing of the charging; and a signal output unit configured to output a request signal for updating the digital certificate when a term of validity of the digital certificate expires by the scheduled timing of the charging.

In the charging control device according to the first aspect of the present disclosure, as described above, when the term of validity of the digital certificate expires by the scheduled timing of the charging, the request signal for updating the digital certificate is output. Thus, the digital certificate can be updated by the scheduled timing of the charging. As a result, when the charging is started, an update of the digital certificate is not needed. Thus, it is possible to restrain the time required to complete the charging of the vehicle from being prolonged.

In the charging control device according to the first aspect, the acquisition unit may be configured to acquire the charging schedule information from at least one of an input terminal provided in the vehicle and a user terminal used by a user of the vehicle. With the configuration thus made, information on the scheduled timing of the charging can be easily acquired based on the charging schedule information from at least one of the input terminal of the vehicle and the user terminal of the user.

In the charging control device according to the first aspect, the charging may be charging for which authentication of a user of the vehicle is performed in response to a charging connector being connected to the vehicle. With the configuration thus made, at a time of charging for which authentication of the user of the vehicle is performed in response to the charging connector being connected to the vehicle, it is possible to restrain time required to complete the charging from being prolonged.

In the charging control device according to the first aspect, the signal output unit may be configured to output the request signal for bringing a button for starting to update the digital certificate into an activated state. The button may be configured to be displayed on at least one of an input terminal provided in the vehicle and a user terminal used by a user of the vehicle. With the configuration thus made, it is possible to allow the user to easily perform an operation for updating the digital certificate (an operation of selecting the button).

In the charging control device according to the first aspect, the signal output unit may be configured to output the request signal, when a state of charge of a battery of the vehicle is a predetermined threshold value or less and the term of validity of the digital certificate expires. Here, when the SOC of the battery of the vehicle is the predetermined threshold value or less, the charging is performed relatively early, compared to when the SOC of the battery is more than the predetermined threshold value. Accordingly, it is effective to output the request signal when the SOC of the battery of the vehicle is the predetermined threshold value or less and when the term of validity of the digital certificate expires, particularly in the point that an update of the digital certificate will have been completed when the charging is started.

In the charging control device according to the first aspect, the signal output unit may be configured to output the request signal, when a current time period is a time period in which frequency of the charging based on historical data on the charging is more than a predetermined threshold value and the term of validity of the digital certificate expires. Here, in the time period in which frequency of the charging is more than the predetermined threshold value, the charging is more likely to be performed than in a time period in which frequency of the charging is the predetermined threshold value or less. Accordingly, it is effective to output the request signal when the current time period is the time period in which frequency of the charging is more than the predetermined threshold value and when the term of validity of the digital certificate expires, particularly in the point that an update of the digital certificate will have been completed when the charging is started.

In the charging control device according to the first aspect, the signal output unit may be configured to output the request signal, when a required amount of electricity that is required to arrive at a destination of the vehicle is more than a remaining amount of electricity in a battery of the vehicle and the term of validity of the digital certificate expires. Here, when the required amount of electricity is more than the remaining amount of electricity in the battery, the charging is performed relatively early, compared to when the remaining amount of electricity is the required amount of electricity or less. Accordingly, it is effective to output the request signal when the required amount of electricity is more than the remaining amount of electricity in the battery of the vehicle and when the term of validity of the digital certificate expires, particularly in the point that an update of the digital certificate will have been completed when the charging is started.

In the charging control device according to the first aspect, the signal output unit may be configured to output the request signal in a state where a charging connector is connected to the vehicle. With the configuration thus made, the digital certificate can be updated in a state where the charging connector is connected to the vehicle.

A vehicle according to a second aspect of the present disclosure is a vehicle of which charging is authenticated based on a digital certificate, the vehicle including: a battery configured to be supplied with electricity through the charging; and a storage unit configured to store the digital certificate. The digital certificate is updated when a term of validity of the digital certificate expires by a scheduled timing of the charging.

In the vehicle according to the second aspect of the present disclosure, as described above, when the term of validity of the digital certificate expires by the scheduled timing of the charging, the digital certificate is updated. Thus, it is possible to provide the vehicle that can restrain the time required to complete the charging of the vehicle from being prolonged.

A charging control method according to a third aspect of the present disclosure is a charging control method by a charging control device of a vehicle, the charging control device controlling charging authenticated based on a digital certificate, the charging control method including: acquiring charging schedule information related to a scheduled timing of the charging; and outputting a request signal for updating the digital certificate when a term of validity of the digital certificate expires by the scheduled timing of the charging.

In the charging control method according to the third aspect of the present disclosure, as described above, when the term of validity of the digital certificate expires by the scheduled timing of the charging, the request signal for updating the digital certificate is output. Thus, it is possible to provide the charging control method that can restrain the time required to complete the charging of the vehicle from being prolonged.

According to the present disclosure, it is possible to restrain time required to complete charging of a vehicle from being prolonged.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 shows configurations of a vehicle and a charging station according to an embodiment;
FIG. 2 shows an example of a pricing system included in a digital certificate;
FIG. 3 shows a charging sequence according to the embodiment;
FIG. 4 is a sequence chart showing control for updating the digital certificate according to the embodiment;
FIG. 5 shows an update button used to update the digital certificate;
FIG. 6 shows details of step S100 in FIG. 4;
FIG. 7 is a first chart showing a flow for transmitting a request signal that requests a digital certificate;
FIG. 8 is a second chart showing a flow for transmitting a request signal that requests a digital certificate;
FIG. 9 is a third chart showing a flow for transmitting a request signal that requests a digital certificate; and
FIG. 10 is a sequence chart showing control for updating the digital certificate according to a modification of the embodiment.

### DETAILED DESCRIPTION OF EMBODIMENTS

Hereinafter, an embodiment of the present disclosure is described in detail with reference to the drawings. Note that the same or equivalent parts are denoted by the same signs throughout the drawings, and a description thereof is not repeated.

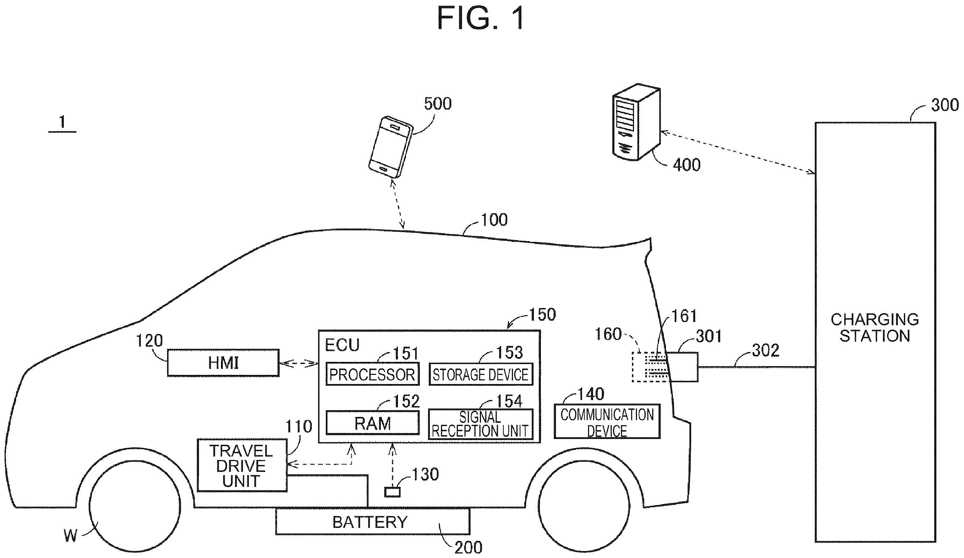

FIG. 1 schematically shows an entire configuration of a charging system 1 according to the present embodiment. The charging system 1 includes an electrified vehicle 100, a charging station 300, and a server 400.

The server 400 stores information related to the electrified vehicle 100. For example, the server 400 stores a digital certificate of the electrified vehicle 100. Here, examples of the digital certificate include an original equipment manufacturer (OEM) certificate, a charging contract certificate, and the like. The charging contract certificate is to certify the content of a contract concluded between a mobility operator (MO) that provides a charging service and a user of the electrified vehicle 100. Although a description is given of a case where the digital certificate is a charging contract certificate in the present embodiment, the digital certificate may be an OEM certificate or the like.

The electrified vehicle 100 includes a battery 200 that stores electricity for traveling. The electrified vehicle 100 is configured to be able to travel by using the electricity stored in the battery 200. Although the electrified vehicle 100 is a battery electric vehicle (BEV) that does not include an engine (internal combustion engine) in the present embodiment, the electrified vehicle 100 may be a hybrid electric vehicle (HEV) or a plug-in hybrid electric vehicle (PHEV), which include an engine. Note that the electrified vehicle 100 is an example of "vehicle" of the present disclosure.

The electrified vehicle 100 includes a control device (electronic control unit (ECU)) 150. The ECU 150 is configured to perform charging control and discharging control of the battery 200. The ECU 150 includes a processor 151, a random access memory (RAM) 152, a storage device 153, and a signal reception unit 154. Note that the processor 151 and the signal reception unit 154 are examples of "signal output unit" and "acquisition unit" of the present disclosure, respectively. The ECU 150 is an example of "charging control device" of the present disclosure. The storage device 153 is an example of "storage unit" of the present disclosure.

The ECU 150 may be a computer. The processor 151 may be a central processing unit (CPU).

The RAM 152 functions as a working memory that temporarily stores data processed by the processor 151.

The storage device 153 is configured to be able to save stored information. The storage device 153 stores a program and information (for example, a map, a formula, and various parameters) to be used by the program. The processor 151 executes the program stored in the storage device 153, whereby various control by the ECU 150 is performed.

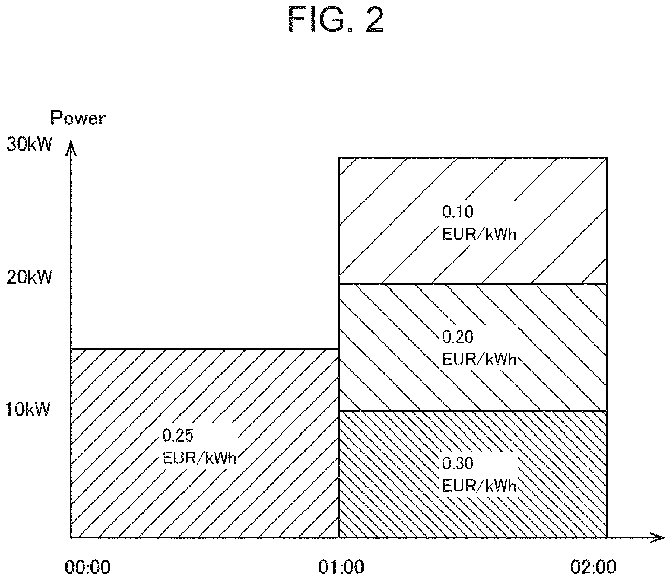

Here, the storage device 153 stores the digital certificate (see FIG. 2). In an example shown in FIG. 2, the digital certificate includes information on charge fees that are determined by times of day and amounts of fed-in electricity. Specifically, the digital certificate includes information indicating that an upper limit of the amount of fed-in electricity is 15 kW from 12 o'clock midnight to 1 a.m. and the charge fee is 0.25 EUR/kWh. Moreover, the digital certificate includes information indicating that during a period between 1 a.m. and 2 a.m., the charge fee for amounts of fed-in electricity up to 10 kW is 0.30 EUR/kWh, the charge fee for amounts of fed-in electricity from 10 kW up to 20 kWh is 0.20 EUR/kWh, and the charge fee for amounts of fed-in electricity from 20 kW up to 30 kWh is 0.10 EUR/kWh.

Moreover, the digital certificate includes identification information associated with the pricing system of FIG. 2. The identification information includes, for example, vehicle information (VIN) on the electrified vehicle 100, individual information on the user of the electrified vehicle 100, card information used to pay a charge fee, and the like.

A term of validity is set on the digital certificate. The ECU 150 controls charging authenticated based on the digital certificate. When the term of validity of the digital certificate expires, an update of the digital certificate is needed.

Referring again to FIG. 1, the signal reception unit 154 receives a predetermined signal from a device other than the ECU 150. For example, the signal reception unit 154 receives the predetermined signal (information) from an HMI device 120 or a communication device 140, which will be described later.

A monitoring module 130 includes various sensors that detect states (for example, voltage, current, and temperature) of the battery 200, and outputs detection results to the ECU 150. The monitoring module 130 may be a battery management system (BMS) that, in addition to the sensor function as described above, further includes a state-of-charge (SOC) estimation function, a state-of-health (SOH) estimation function, a cell voltage equalization function, a diagnosis function, and a communication function. The ECU 150 can acquire states (for example, temperature, current, voltage, SOC, and internal resistance) of the battery 200, based on outputs of the monitoring module 130. Note that the battery 200 is charged (externally charged) with electricity supplied from the charging station 300.

The electrified vehicle 100 further includes a travel drive unit 110, the human machine interface (HMI) device 120, the communication device 140, an inlet 160, and drive wheels W.

The travel drive unit 110 includes a power control unit (PCU) and a motor generator (MG) (not shown), and is configured to cause the electrified vehicle 100 to travel by using electricity stored in the battery 200.

The PCU includes, for example, an inverter, a converter, and a relay (hereinafter, referred to as "system main relay (SMR)"). The PCU is controlled by the ECU 150.

The MG is, for example, a three-phase alternating-current motor generator. The MG is driven by the PCU, and is configured to cause the drive wheels W to rotate. The PCU drives the MG by using electricity supplied from the battery 200. The MG is configured to perform regenerative electricity generation and supply generated electricity to the battery 200.

The SMR is configured to switch between connection and disconnection of an electricity path from the battery 200 to the PCU. The SMR is brought in a closed state (connection state) when the electrified vehicle 100 is traveling.

The HMI device 120 includes an input device and a display device. The HMI device 120 may include a touch panel display. Note that the HMI device 120 is an example of "input terminal" of the present disclosure.

The communication device 140 communicates with, for example, a mobile terminal 500 (for example, a smartphone) used by the user of the electrified vehicle 100. The communication device 140 may include a data communication module (DCM), and may include a communication IF supporting the fifth generation mobile communication system (5G). Note that the mobile terminal 500 is an example of "user terminal" of the present disclosure.

The inlet 160 is configured such that a charging connector 301 of the charging station 300 can be inserted therein. The charging connector 301 is provided at a distal end of a charging cable 302 attached to the charging station 300. The charging connector 301 is inserted into the inlet 160, whereby the electrified vehicle 100 is electrically connected to the charging station 300. Thus, supply and reception of electricity can be performed between the charging station 300 and the electrified vehicle 100.

### Charging Sequence

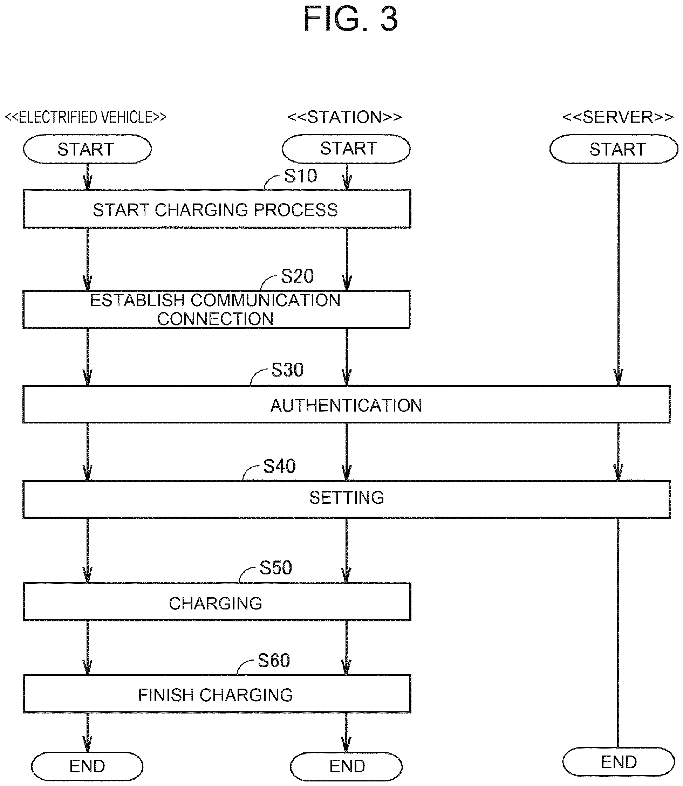

FIG. 3 is a sequence chart showing a charging process among the electrified vehicle 100, the charging station 300, and the server 400.

In step S10, a charging process between the electrified vehicle 100 and the charging station 300 is started.

In step S20, a communication connection with security ensured is established between the electrified vehicle 100 and the charging station 300. Specifically, the communication connection is established by using user datagram protocol (UDP), transmission control protocol (TCP), and transport layer security (TLS).

In step S30, various authentication is performed between the electrified vehicle 100 and the charging station 300. For example, processes of confirming identity (identification), confirming data (authentication), giving authority (authorization), and the like are performed.

In step S40, settings are made. For example, a target setting, a charge scheduling setting, and the like are made.

In step S50, charging between the electrified vehicle 100 and the charging station 300 is performed. In step S60, the charging is finished.

Here, when the term of validity of the digital certificate expires, an update of the digital certificate is needed. In such a case, time for updating the digital certificate is required at a time of charging, so that time required to complete the charging is prolonged.

Accordingly, in the present embodiment, when the term of validity of the digital certificate expires by a scheduled timing of charging, the processor 151 of the ECU 150 outputs a request signal for updating the digital certificate. Thus, the digital certificate can be more reliably updated by the scheduled timing of charging. Specifically, the processor 151 determines whether or not the scheduled timing of charging that comes after the present time is before an expiration date of the digital certificate. When it is determined that the scheduled timing of charging is before the expiration date of the digital certificate, the processor 151 outputs (generates) the request signal by the scheduled timing of charging.

### Update of Digital Certificate

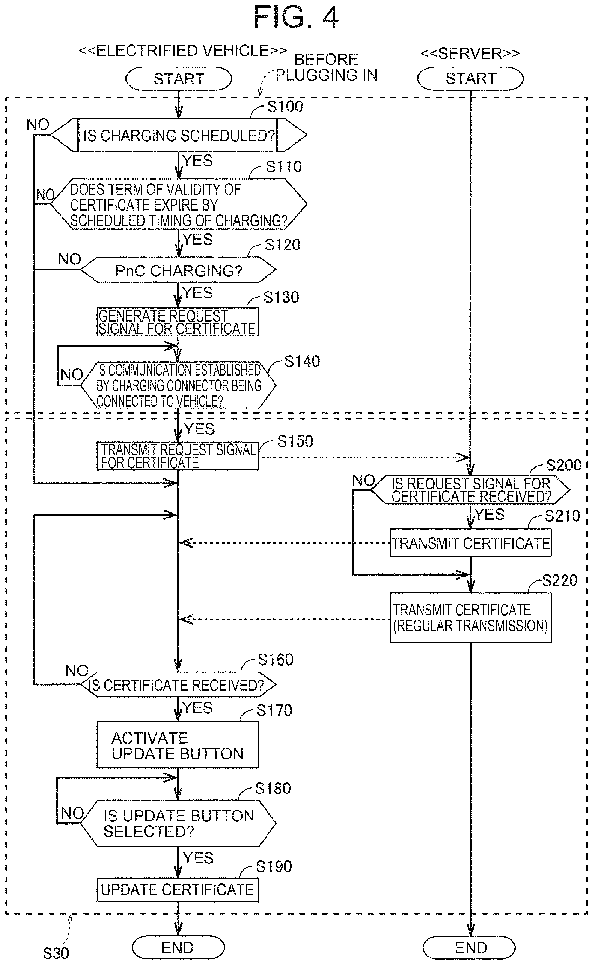

Sequential control for updating the digital certificate is described with reference to FIGS. 4 to 6.

In step S100, the ECU 150 (processor 151) determines whether or not charging of the electrified vehicle 100 is scheduled (planned). When charging is scheduled (YES in S100), the process proceeds to step S110. When charging is not scheduled (NO in S100), the process proceeds to step S160. Details of step S100 will be described later.

In step S110, the ECU 150 (processor 151) determines whether or not the term of validity of the digital certificate expires by a scheduled timing of charging based on charging schedule information acquired in step S100. When the term of validity of the digital certificate expires by the scheduled timing of charging (YES in S110), the process proceeds to step S 120. When the term of validity of the digital certificate does not expire by the scheduled timing of charging (NO in S110), the process proceeds to step S160.

In step S120, the ECU 150 (processor 151) determines whether or not charging to be performed with the charging station 300 is PnC charging (charging for which user authentication is performed in response to a charging connector being connected to a vehicle). When PnC charging is performed (YES in S120), the process proceeds to step S130. When PnC charging is not performed (NO in S120), the process proceeds to step S160.

In step S130, the ECU 150 (processor 151) generates a request signal (Authorization Setup Req) that requests a digital certificate. Subsequently, the process proceeds to step S140.

In step S140, the ECU 150 (processor 151) determines whether or not the charging connector 301 is connected to the inlet 160 of the electrified vehicle 100 and a communication connection is established (see step S20 in FIG. 3). When the communication connection is established (YES in S 140), the process proceeds to step S 150. When the communication connection is not established (NO in S140), the process in step S140 is repeated. Note that the processes in steps S100 to S140 may be performed basically before plugging in, but determination in the process in step S140 becomes "YES" after plugging in.

In step S 150, the ECU 150 transmits the request signal generated in step S130 to the server 400. The request signal is transmitted to the charging station 300 through a connection terminal 161 of the inlet 160 (see FIG. 1), the charging connector 301, and the charging cable 302. Then, the charging station 300 transmits the received request signal to the server 400. Subsequently, the process at the electrified vehicle 100 proceeds to step S160.

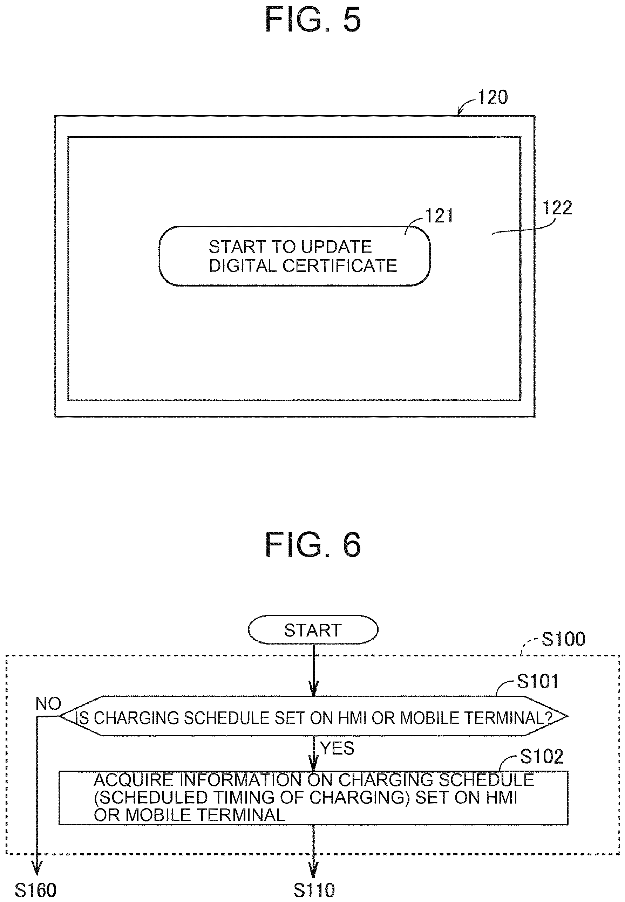

Note that the request signal transmitted in step S150 is a signal for bringing an update button 121 (see FIG. 5) for starting to update the digital certificate into an activated state. The update button 121 is, for example, displayed in a display screen 122 of the HMI device 120. The update button 121 may be displayed on the mobile terminal 500. The update button 121 may be displayed on each of the mobile terminal 500 and the HMI device 120. Note that the update button 121 is an example of "button" of the present disclosure.

In step S200, the server 400 determines whether or not the request signal for a digital certificate is received. When the request signal is received (YES in S200), the process proceeds to step S210. When the request signal is not received (NO in S200), the process proceeds to step S220.

In step S210, in response to the request signal, the server 400 transmits, to the electrified vehicle 100, a response signal (AuthorizationRes) for transmitting a digital certificate. Specifically, the response signal is transmitted to the electrified vehicle 100 via the charging station 300, similarly to the request signal.

In step S220, the server 400 transmits a digital certificate to the electrified vehicle 100. The transmission in step S220 is regular transmission performed at a preset timing. Note that a timing of executing the process in step S220 is not limited to the example shown in FIG. 4.

In step S160, the ECU 150 (processor 151) determines whether or not the digital certificate transmitted by the server 400 in step S210 (or S220) is received by the signal reception unit 154. When the digital certificate is received (YES in S160), the process proceeds to step S170. When the digital certificate is not received (NO in S160), the process in step S160 is repeated.

In step S170, the ECU 150 (processor 151) executes a process of bringing the update button 121 (see FIG. 5) for updating the digital certificate into an activated state. At the time, the ECU 150 may make a notification indicating that the update button 121 is activated, through an app on the HMI device 120 or the mobile terminal 500.

In step S180, the ECU 150 (processor 151) determines whether or not the update button 121 is selected (touched). When the update button 121 is selected (YES in S180), the process proceeds to step S190. When the update button 121 is not selected (NO in S180), the process in step S180 is repeated.

In step S190, the ECU 150 (processor 151) executes a process of updating the digital certificate. Note that when accessory voltage of the electrified vehicle 100 falls below a predetermined value, the updating process may be stopped.

In the present embodiment, the processes in and after step S150 are executed in the authentication step in step S30. Note that the processes in and after step S150 may be executed in the setting step in step S40.

### Confirmation of Charging Schedule

As shown in FIG. 6, the process in step S 100 includes a process in step S 101 and a process in step S102.

In step S101, the ECU 150 (processor 151) determines whether or not charging schedule information is set on the HMI device 120 or the mobile terminal 500. When the charging schedule information is set (YES in S101), the process proceeds to step S102. When the charging schedule information is not set (NO in S101), the process proceeds to step S160.

Specifically, the ECU 150 (processor 151) transmits, to the HMI device 120 and the mobile terminal 500, a signal that inquires whether or not charging schedule information is set. Note that the signal that inquires whether or not charging schedule information is set may be transmitted to any one of the HMI device 120 and the mobile terminal 500.

Incidentally, the HMI device 120 and the mobile terminal 500 (apps) may be able to set whether or not charging is performed at a charging station 300 that supports PnC charging. A charging station 300 where and a time of charging when charging is desired to be performed (as well as a time of arrival, a time of departure), and the like may also be able to be set.

In step S102, the ECU 150 (processor 151) acquires the information on a charging schedule (a scheduled timing of charging) set on the HMI device 120 or the mobile terminal 500. Specifically, the ECU 150 (processor 151) transmits, to the terminal responding that the charging schedule information is set, a request signal that requests the charging schedule information.

### Request for Digital Certificate Based on SOC

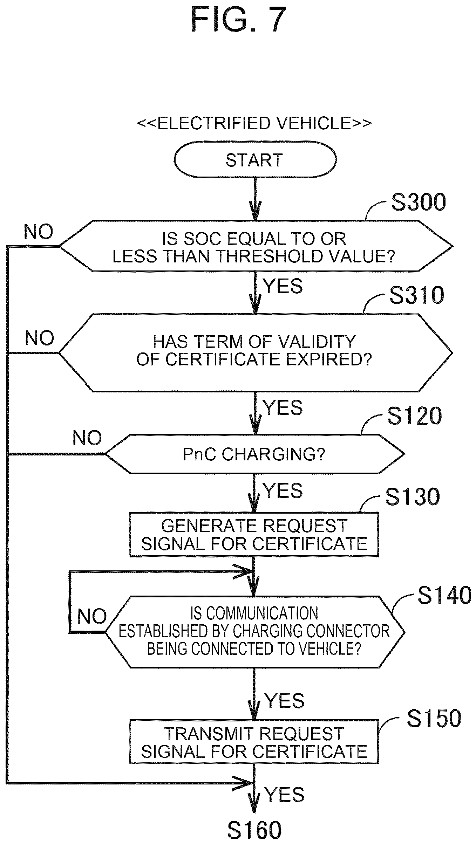

Next, with reference to FIG. 7, a method is described in which a request signal for a digital certificate is transmitted to the server 400, based on a state of charge (SOC) of the battery 200. Note that processes in FIG. 7 are executed in each predetermined period.

In step S300, the ECU 150 (processor 151) determines whether or not the SOC of the battery 200 is a predetermined threshold value (for example, 20%) or less. When the SOC is the predetermined threshold value or less (YES in S300), the process proceeds to step S310. When the SOC is more than the predetermined threshold value (NO in S300), the process proceeds to step S160 (see FIG. 4).

In step S310, the ECU 150 (processor 151) determines whether or not the term of validity of the digital certificate expires. When the term of validity of the digital certificate expires (YES in S310), the process proceeds to step S120 (see FIG. 4). When the term of validity of the digital certificate has not expired (NO in S310), the process proceeds to step S160.

### Request for Digital Certificate Base on Charging History

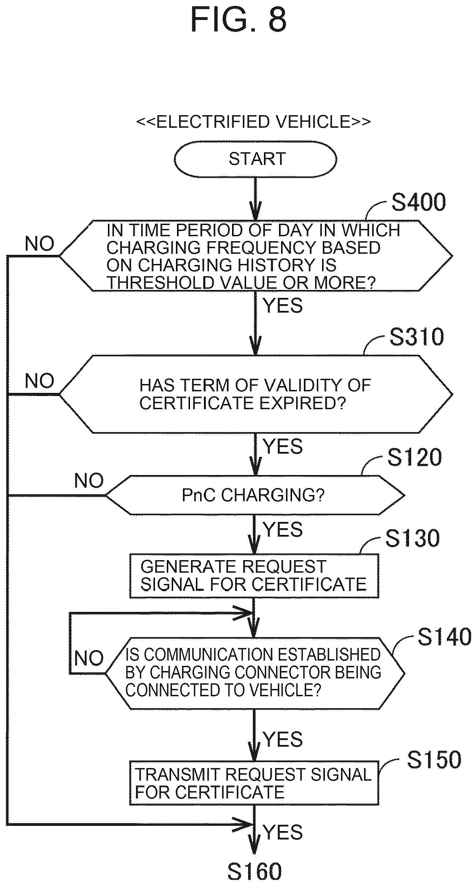

Next, with reference to FIG. 8, a method is described in which a request signal for a digital certificate is transmitted to the server 400, based on charging history of the battery 200. Note that processes in FIG. 8 are executed in each predetermined period.

In step S400, the ECU 150 (processor 151) determines whether or not a current time period is a time period in which charging frequency based on past charging history is a predetermined threshold value or more. When charging frequency is the predetermined threshold value or more (YES in S400), the process proceeds to step S310. When charging frequency is less than the predetermined threshold value (NO in S400), the process proceeds to step S160. For example, the ECU 150 may determine that a time period in which charging was performed 10 times or more, in the past 30 days, is the time period in which charging frequency is the predetermined threshold value or more. Note that data on the charging history may be acquired, for example, from the server 400 or the like.

Since the process in step S310 is similar to that of FIG. 7, a repeated description thereof is not given.

### Request for Digital Certificate Based on Remaining Amount of Electricity

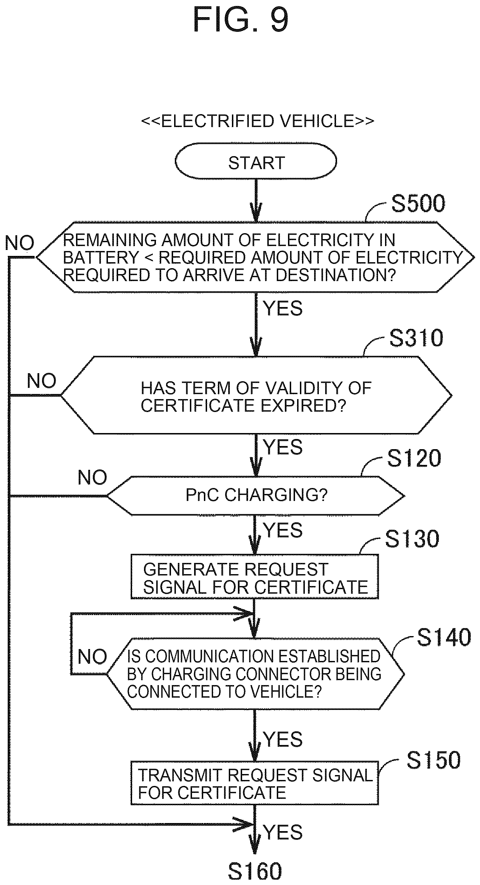

Next, with reference to FIG. 9, a method is described in which a request signal for a digital certificate is transmitted to the server 400, based on a remaining amount of electricity in the battery 200. Note that processes in FIG. 9 are executed in each predetermined period.

In step S500, the ECU 150 (processor 151) determines whether or not the remaining amount of electricity in the battery 200 is less than a required amount of electricity that is required to arrive at a destination of the electrified vehicle 100. When the remaining amount of electricity is less than the required amount of electricity (YES in S500), the process proceeds to step S310. When the remaining amount of electricity is the required amount of electricity or more (NO in S500), the process proceeds to step S160. Note that the remaining amount of electricity may be calculated by the ECU 150 based on an SOC of the battery 200 and an electricity capacity of the battery 200. Moreover, the required amount of electricity may be calculated by the ECU 150 based on a distance between the destination set on the HMI device 120 or the like and a current position.

Since the process in step S310 is similar to that of FIG. 7, a repeated description thereof is not given.

As described above, in the present embodiment, when the term of validity of the digital certificate expires by a scheduled timing of charging, the ECU 150 (processor 151) outputs a request signal for updating the digital certificate. Thus, a process of updating the digital certificate can be started prior to the scheduled timing of charging. As a result, it is possible to restrain the time required to complete charging of the electrified vehicle 100 from being prolonged.

Moreover, the process of generating a request signal for a digital certificate and the preceding processes can be completed before plugging in. As a result, charging can be immediately started, compared to when the processes mentioned above are executed after plugging in.

Although the embodiment illustrates an example in which the request signal that requests a digital certificate is transmitted to the server 400 in a state where the charging connector 301 is inserted in the inlet 160, the present disclosure is not limited to such an example. The request signal may be transmitted to the server 400 via the communication device 140 in a state where the charging connector 301 is not inserted in the inlet 160. In such a case, an update of the digital certificate may be performed in the state where the charging connector 301 is not inserted in the inlet 160. For example, even if the electrified vehicle 100 is traveling, an update may be performed when an auxiliary power supply is provided in the electrified vehicle 100.

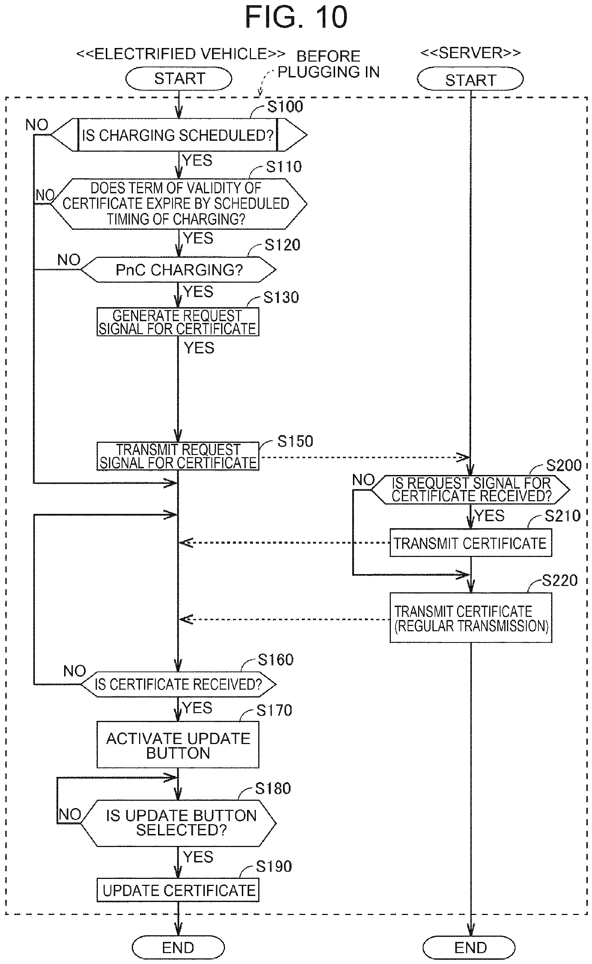

Specifically, control may be performed according to a sequence shown in FIG. 10. In the sequence shown in FIG. 10, step S 140 of the sequence shown in FIG. 4 is omitted, and all the processes in and before step S 190 are performed before plugging in. Thus, an update of the digital certificate has already been completed at a time point when the electrified vehicle 100 is connected to the charging station 300 (at a time point of plugging in), and it is therefore possible to further restrain the time required to complete charging of the electrified vehicle 100 from being prolonged.

Although the embodiment illustrates an example in which the digital certificate is updated in response to the activated update button 121 being selected, the present disclosure is not limited to such an example. For example, an update of the digital certificate may be automatically performed in response to a digital certificate being installed in the electrified vehicle 100.

Although the embodiment illustrates an example in which the request signal that requests a digital certificate is transmitted to the server 400 when the SOC is the threshold value or less and the term of validity of the digital certificate expires, the present disclosure is not limited to such an example. For example, the request signal may be transmitted to the server 400 at a time point when it is determined that the term of validity of the digital certificate will expire within a predetermined time period (for example, within two hours) from a time at which the SOC becomes the threshold value or less.

Although the embodiment illustrates an example in which the request signal that requests a digital certificate is transmitted to the server 400 when the current time period is the time period in which charging frequency is the threshold value or more, the present disclosure is not limited to such an example. When charging frequency becomes the threshold value or more in a later time period than the current time period of day, the request signal may be transmitted to the server 400 at a time point when it is determined (before the later time period of day) that the term of validity of the digital certificate will expire during the later time period of day.

Although the embodiment illustrates an example in which the request signal that requests a digital certificate is transmitted to the server 400 when the remaining amount of electricity in the battery 200 is less than the required amount of electricity that is required to arrive at the destination and the term of validity of the digital certificate expires, the present disclosure is not limited to such an example. For example, the request signal may be transmitted to the server 400 at a time point when it is determined that the term of validity of the digital certificate will expire within a predetermined time period (for example, within two hours) from a time at which the remaining amount of electricity becomes less than the required amount of electricity.

Although the embodiment illustrates an example in which whether to transmit the request signal for a digital certificate is determined based on whether or not charging is scheduled, the present disclosure is not limited to such an example. It may be determined whether or not to transmit the request signal based on whether or not a scheduled timing of charging is in a predetermined period.

Although the embodiment illustrates an example in which the update button 121 is activated after a digital certificate is received, the present disclosure is not limited to such an example. For example, the update button 121 may be activated at a timing when the request signal for a digital certificate is generated, or the like, and the update button 121 may be selected before a digital certificate is received. In such a case, an update of the digital certificate is started at a time point when a digital certificate is installed in the electrified vehicle 100.

Note that each of the configurations (processes) according to the embodiment and the modifications may be combined with any of the others.

The embodiment disclosed herein shall be considered in all respects as illustrative and not as restrictive. The scope of the present disclosure is defined by claims, not by the detailed description of embodiments given above, and is intended to include equivalents to claims and all changes made within the scope.

## Claims

1. A charging control device (150) of a vehicle (100), the charging control device (150) being configured to control charging authenticated based on a digital certificate, the charging control device (150) comprising:
an acquisition unit (154) configured to acquire charging schedule information related to a scheduled timing of the charging; and
a signal output unit (151) configured to output a request signal for updating the digital certificate when a term of validity of the digital certificate expires by the scheduled timing of the charging.

2. The charging control device (150) according to claim 1, wherein the acquisition unit (154) is configured to acquire the charging schedule information from at least one of an input terminal (120) provided in the vehicle (100) and a user terminal (500) used by a user of the vehicle (100).

3. The charging control device (150) according to claim 1 or 2, wherein the charging is charging for which authentication of a user of the vehicle (100) is performed in response to a charging connector (301) being connected to the vehicle (100).

4. The charging control device (150) according to claim 1 or 2, wherein the signal output unit (151) is configured to output the request signal for bringing a button for starting to update the digital certificate into an activated state, the button being displayed on at least one of an input terminal (120) provided in the vehicle (100) and a user terminal (500) used by a user of the vehicle (100).

5. The charging control device (150) according to claim 1 or 2, wherein the signal output unit (151) is configured to output the request signal, when a state of charge of a battery (200) of the vehicle (100) is a predetermined threshold value or less and the term of validity of the digital certificate expires.

6. The charging control device (150) according to claim 1 or 2, wherein the signal output unit (151) is configured to output the request signal, when a current time period is a time period in which frequency of the charging based on historical data on the charging is more than a predetermined threshold value and the term of validity of the digital certificate expires.

7. The charging control device (150) according to claim 1 or 2, wherein the signal output unit (151) is configured to output the request signal, when a required amount of electricity that is required to arrive at a destination of the vehicle (100) is more than a remaining amount of electricity in a battery (200) of the vehicle (100) and the term of validity of the digital certificate expires.

8. The charging control device (150) according to claim 1 or 2, wherein the signal output unit (151) is configured to output the request signal in a state where a charging connector (301) is connected to the vehicle (100).

9. A vehicle (100) of which charging is authenticated based on a digital certificate, the vehicle (100) comprising:
a battery (200) to which electricity is supplied through the charging; and
a storage unit (153) configured to store the digital certificate,
wherein the digital certificate is updated when a term of validity of the digital certificate expires by a scheduled timing of the charging.

10. A charging control method by a charging control device (150) of a vehicle (100), the charging control device (150) being configured to control charging authenticated based on a digital certificate, the charging control method comprising:
acquiring charging schedule information related to a scheduled timing of the charging; and
outputting a request signal for updating the digital certificate when a term of validity of the digital certificate expires by the scheduled timing of the charging.
